(19)

Europäisches
Patentamt
European
Patent Office
Office européen
des brevets

(11) **EP 4 357 999 A1**

(12) **EUROPEAN PATENT APPLICATION**

(43) Date of publication:
**24.04.2024 Bulletin 2024/17**

(21) Application number: **22202554.6**

(22) Date of filing: **19.10.2022**

(51) International Patent Classification (IPC):
*G06Q 20/06* (2012.01)    *G06Q 20/38* (2012.01)
*G06Q 20/36* (2012.01)    *G06Q 40/04* (2012.01)
*G06Q 40/06* (2012.01)    *H04L 9/00* (2022.01)

(52) Cooperative Patent Classification (CPC):
**G06Q 20/065; G06Q 20/36; G06Q 20/3678;
G06Q 20/381; G06Q 40/04; G06Q 40/06;
H04L 9/50**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Kolibri GmbH
65760 Eschborn (DE)**

(72) Inventors:
• **The inventors have waived their right to be thus
mentioned.**

(74) Representative: **Dr. Langfinger & Partner
Grüneburgweg 119
60323 Frankfurt am Main (DE)**

(54) **METHOD FOR PRICE STABILIZATION OF A DIGITAL COIN OR TOKEN**

(57)    The present invention relates to a method for processing a digital token comprising:
an issuer system comprising a systems electronic wallet being in communication with at least one smart contract, wherein the smart contract is configured and adapted to create tokens A, wherein said tokens A are created when a user's electronic wallet is signing said smart contract of the issuer systems, and wherein after signing of said smart minting contract the user's smart wallet is sending a number of tokens B to the system's smart wallet; and in exchange for receiving a said number of tokens B, the system's electronic wallet is sending a number of tokens A to the user's wallet in a ration to the tokens B received, wherein said ratio is provided by the smart minting contract, and wherein the minting smart contract is sending in addition to the number of tokens A a number of tokens C in a given ration to the tokens A to the user's electronic wallet, wherein tokes C are not identical with tokens A.

EP 4 357 999 A1

**Description**

The present invention relates to a method for stabilizing a price of a digital coin or token.

A blockchain is a distributed and public ledger which maintains records of all the transactions. A blockchain network is a truly peer-to-peer network and it does not require a trusted central authority or intermediaries to authenticate or to settle the transactions or to control the network infrastructure.

Users can interact and transact with the blockchain networks through Externally Owned Account (EOAs), which are owned and controlled by the users. Such an EOA is as well as known as an "electronic wallet". Each electronic wallet or EOA has a balance (in certain units of a Cryptocurrency associated with the Blockchain network) associated with it. EOAs do not have any associated code. All transactions on a blockchain network are initiated by EOAs. These accounts can send transactions to other EOAs or contract accounts.

Another type of accounts support by second generation programmable Blockchain platforms are the Contract Accounts. A Contract Account is created and owned by an EOA and is controlled by the associated contract code which is stored with the account. Such contracts are as well known as "smart contracts". The contract code execution is triggered by transactions sent by EOAs or messages sent by other contracts.

Subsequently, the terms "smart contract" and "electronic wallets" are used for the above stated definitions subsequently to describe the scope of the present invention.

Blockchain networks can either be public or private.

Public blockchain networks are free and open to all and any user can create an account and participate in the consensus mechanism on a public blockchain and view all the transactions on the network.

Private blockchain networks are usually controlled and operated by a single organization and the transactions can be viewed only by the users within the organization.

Public blockchain networks are usually unpermissioned or permissionless, as any node can participate in consensus process. Some public blockchain networks adopt a permissioned model where the consensus process is controlled by a pre-selected set of nodes.

Private blockchain networks usually adopt the permissioned model. While public blockchain networks can be considered as fully decentralized, private blockchain networks are partially decentralized.

Organizations can have multiple private blockchain networks where each network is dedicated to a specific use case or department or business vertical. The blockchain networks within an organization may be created either using the same blockchain platform or technology or with different platforms or technologies.

On each blockchain network, a user can create multiple electronic wallets. Each electronic wallet has a public-private keypair associated with it. The account address is derived from the public key. When a new electronic wallet is created, a keyfile is created which has the public and private keys associated with the account.

The private key is encrypted with the password which is provided while creating the account. For sending transactions to other accounts, the private key and the account password are required.

Based on blockchains, tokens can be created that looks and feel for the user as the native blockchain token, but is just a derviate of the actual block chain.

An example of such tokens are ERC20 tokens which are built on the Etherium Blockchain and ERC-721 token for non-fungible tokens (NFTs).

The present invention aims on a method of stabilizing a price of a coin or token on a blockchain.

According to the state of the art so called stable coins are well known. The most popular stable coins are USDC and USDT, which are both coupled to the value of 1 US-Dollar per 1 Coin of USDC or USDT.

To provide this stability, stable coins are either algorithmic stable coins or asset-backed stable coins.

In contrast to, a stable currency -not a stable coin, but a currency having a low volatility - requires a scaled infrastructure and a high capital outlay. For initial investors who capitalize such a cryptocurrency, an economic advantage is significant.

Through a price increase over time, the adaptation and the associated price growth of the cryptocurrency can be shared with investors. At the same time, the increase in purchasing power associated with a price increase is beneficial to investors and also to users acting on a shorter-term basis. In addition, both user groups benefit from low volatility.

Therefore, it would be of advantage for a currency achieve a price increase that is as stable as possible, with the growth rate being as constant as possible.

For a long time, the gold standard for currencies was also regarded as a guarantee for a stable exchange rate, but also that everyday users would receive the value promised to them. With the dilution of the gold standard in the 1960s, several waves of inflation and economic crises have followed.

Meanwhile, as a concept for "stable" cryptocurrencies, there are the above cited stablecoins that seek to hedge their value by holding an equivalent number of FIAT currency units or other securities. Using it as a payment method also provides a similar hedge. This is because it is possible to exchange currency units directly for a product in this way. So the more broadly a payment method is integrated, the more this corresponds to a "gold standard" for the currency behind it.

Anyhow, said stable coins have not the advantage of an increasing price over time making the same more interesting for long and shortterm users and for electronic payments - as the purchasing power is stable - but of course not the risk of falling values and short term price fluctuation.

Widespread payment providers such as PayPal, Stripe, Square and others have a high market share but offer some disadvantages. These include low anonymity: data is shared with payment providers, participating payment networks (e.g., Visa or American Express), the company, banks, and relevant regulators. This can be prevented by using a cryptocurrency.

In addition, there are high transaction costs: these are often between 1% up to 4% of the transaction value, which have to be paid by the online store but indirectly passed on to the users. Also, the influence of a central decision-maker in the long term often leads to worsened conditions for users and online stores due to the establishment of a monopoly position, which is reflected, for example, in stricter terms and conditions, poorer data protection, and an increase in transaction fees.

For online payments with crypto currencies it would be of advantage to have a coin or token which is not fixed to a fiat currency, but that has a low volatility as well for daily payments combined in the best case with a steady increase in value and purchase power.

To reduce the volatility of a token, several difficult technical problems have to be solved.

The scope of the present invention is therefor to provide a technical solution to reduce volatility of a coin or token.

This objective-technical problem is solved by a method for processing a digital token comprising:

> an issuer system comprising a systems electronic wallet being in communication with at least one smart contract, wherein the smart contract is configured and adapted to create tokens A, wherein
> said tokens A are created when a user's electronic wallet is signing said smart contract of the issuer systems, and wherein
> after signing of said smart minting contract the user's smart wallet is sending a number of tokens B to the system's smart wallet; and
> in exchange for receiving a said number of tokens B, the system's electronic wallet is sending a number of tokens A to the user's wallet in a ration to the tokens B received, wherein said ratio is provided by the smart minting contract, and wherein
> the minting smart contract is sending in addition to the number of tokens A a number of tokens C in a given ration to the tokens A to the user's electronic wallet, wherein tokes C are not identical with tokens A.

With the provided invention, three different types of users may be addressed. The first group of users are investors hoping for an increased price of the tokens. The second group are users that likes to pay in online shops with the tokens and the third group are merchants including the tokens into their payment system.

The investors buy tokens A and hope for a price growth as well as a stable price development. They also benefit from lucrative liquidity providing and staking programs as well as other exclusive bonuses that may be provided in addition.

The second user group contains of everyday users. They are interested in a low-cost (free), anonymous payment method that is easy to use. The currency used should have the lowest possible volatility.

Both user groups complement each other in that investors benefit from a high liquidity pool volume, which makes liquidity providing more economically interesting. This makes liquidity providing more relevant, which in turn increases the liquidity pool and demand, leading to a stabilization or increase in the exchange rate.

Staking programs also increase the stability of the price by temporarily reducing the available supply to be sold. In turn, everyday users benefit from the stability, possibly an increase in purchasing power, and the general decentralized infrastructure whose provision is enabled by investors. This may be combined with cashback when using payment integration.

The surprising finding of the present invention is that the volatility may be reduced by the help of an automated buyback pool while the access to said buyback pool is limited by the system.

To limit the access to the buyback pool, once an investor mints a token A by signing the respective smart contract and paying token B in exchange, the user automatically receives another token C with allows him to opt-in into the buyback pool for stabilizing the price of the token A.

The technical advantage of having two separate tokens is that tokens A and C are separated from each other and can be traded separately. The sum of tokens A define the maximum number of tokens C as they are linked to each other, and in parallel, the size of the buyback pool is restricted. These restrictions can provide the incentives needed for users to provide money in form of tokens B and or another token D into the buyback pool.

If there are to less tokens in the buyback pool, the interest rate is very high, and people like to invest. This is quite simple to solve. If there are too much tokens in the buyback pool, there is no incentive to invest into the same.

Therefore, it is preferred by the invention that the issuer system comprises a buyback pool smart contract for stabilizing the price of tokes A, wherein a buyback pool smart contract is comprising a buyback pool wallet, wherein for providing liquidity for the buyback pool in form of tokens B and/or D, a user's wallet is sending a number of tokens C and tokens B and/or D in a given ration to the tokens C to the buyback pool wallet.

Furthermore, it may be of advantage that the number of tokens C send to the buyback pool wallet is automatically burned buy the buyback pool smart contract by sending the same to a dead wallet.

This means, once a user wants to participate in the buyback pool, the tokens needed for said participation can be used only once.

According to one embodiment of the present disclosure, the ration of tokens B and/or D to tokens C is fixed.

In the alternative, it may be preferred that the ration of tokens B and/or D to tokens C is dynamic, in particular depending on the number and ration of tokens A and B or D in the buyback pool.

It may be of advantage if there is a fixed ratio of participation of the buyback pool per token C. In an alternative embodiment said participation rate may depend on the utilization of the buyback pool in relation to the amount of tokens B or D needed into the same and/or other parameters helping to reduce the volatility of the price of token A.

According to one embodiment of the present invention, tokens B and/or D are stable coins.

Thereby, it may be preferred that whenever the price of one token A in relation to one token B and/or D is lower than a given threshold F, the buyback pool wallet is buying tokens A in exchange for tokens B or D.

Thereby, the buyback pool smart contract may comprise an internal buyback pool token E for allocating a percentage of the buyback pool to each user separately.

Furthermore, according to one example of the present disclosure, the buyback pool smart contract buys tokens A from the liquidity pool in exchange of tokens B and/or D.

Aa well, it may be preferred that the bought tokens A by the buyback pool smart contract are distributed to the user's electronic wallets in relationship to their respective share of the buyback pool.

The buyback pool works in the same way a liquidity pool with an internal pool token works. It may be recorded which share a user has in the entire buyback pool. According to a defined algorithm, which is anchored in a program, tokens B or D are now transferred from the buyback pool to the liquidity pool and tokens A are bought back in this way. These tokens A are distributed proportionally to the users investing in the buyback pool in case of a buyback.

In this way, it is possible according to the invention to support token A and its price and provide volume for buybacks, while at the same time acquiring tokens A at a statistically more favorable price: This is because the algorithm performs buybacks mainly when there is a price drop, and less frequently when the price moves up. Thus, small rewards are also available when the price is rising; and larger ones when the price remains constant or there are short-term negative trends - which are then interrupted by this pool, among other things.

It may as well be possible, that in addition to the distribution of tokens A to the user's, a bonus in form of additional tokens A in a given ratio to the paid number of tokens A is send to the respective user's wallet.

Furthermore, it may be of advantage according to one embodiment of the present method, that the issuer systems comprises a liquidity pool smart contract having three electronic wallets, one wallet for tokens A, one wallet for tokens B and one wallet as pool-state account.

Thereby, it may be preferred that the liquidity pool smart contracts is offering the exchange from tokens A to tokens B, the exchange from tokens B to tokens A, to add liquidity, to remove liquidity, to let user claim liquidity-pool rewards.

Method according to any of the preceding claims, wherein
the issuer system comprises a second buyback pool smart contract for stabilizing the price of tokes A, wherein the second buyback pool smart contract is comprising a second buyback pool wallet with an initial supply of tokens A, and wherein whenever the price of one token A in relation to one token B and/or D is higher than a given threshold G, the second buyback pool wallet is selling tokens A in exchange for tokens B or D.

To reduce the volatility of the token A, a second buyback pool is supporting the stability of the token A. This buyback pool is working in form of a buyback bot. Bot trading is well known in the state of the art.

In the field of high-frequency trading, the density of competitors is very high, while the profit rate per trade is reduced. This strives towards 50%. Relevant for this strategy is only that more trades win than trades lose; the volume can be increased arbitrarily.

An economically interesting compromise is offered by trades that take place close to the future but are not classified as high-frequency trading. Here the precision of the trades is the highest and there is only a low density of competition, while at the same time the volume used can be scaled.

Accordingly, the buyback bot of the second buyback pool technology focuses on a targeted time period of 30 minutes to 4 hours duration of a trade. From historical data, 98% of trades made fall within this time period. An average number of trades of 5 to 100 trades per day is targeted.

For the buyback bot, so called set-ups are definend. A set-up is defined as an indicator-based pattern that defines an entry point (Entry) and an exit point (Exit).

All set-ups will be combined with all currency pairs. Only certain groups of currency pairs cannot be combined with certain set-ups. This results in a total set of all possible combinations.

Basically, stop limit orders are used for all trades and the average risked capital per trade is around 1%. That means, that according to one preferred embodiment of the invention the buyback bot risk on average around 1 %, in particular exactly 1% or 1% plus/minus 0,1 %, of the total buy-back pool value.

The overview below shows an excerpt of different set-ups used by the Athena trading bot technology. In total, about 9000 combinations from over 80 strategies and more than 200 currency pairs are currently used.

In addition, the buy-back bot technology uses so-called backtesting. As part of this, existing drafts for strategies are not only tested live with fictitious money (paper trading), but the strategies are tested against historical data.

Between 20 million and 5 billion historical data points are used; the data are weighted differently in each case. In this way, it is possible to determine how effectively individual set-ups work in each case in combination with a currency pair.

This is combined with an evolutionary optimization algorithm, which then fully optimizes all parameters of the set-up per currency pair. In the process, an error function is determined that should provide the lowest possible result. For this purpose, global minima of the error function are searched in up to 500 epochs and 5 rounds. Random biases are used for initialization. In total, different parameters can be optimized up to several decimal places.

According to an preferred embodiment of the present invention, an extensive fundamental analysis is used. As part of this, data on blockchains, large transactions, media and political events, Twitter trends, public indicators and more are collected and analyzed automatically. An example of this is the indicator "Fear-and-Greed Index", which is relied on by a broad mass of investors, or keywords like "Bitcoin" on Twitter.

Moreover, according to another embodiment of the present disclosure, forward analysis is performed based on fundamental analysis, technical analysis and optimized set-ups. In this process, new live simulations are continuously developed from historical events and the current data, which further specify the results of the trades.

According to a further example of the present innovation, a balancer technology may be implemented that also recognizes, based on fundamental analysis and forward analysis, which columns or rows of the matrix, respectively specific set-up currency pair combinations or currency pair groups should be used or paused. In this way, for example, the risk is minimized in certain market situations.

Subsequently, the liquidity pool smart contract outlined before is explained in more detail. The implementation of the liquidity pool according to the liquidity pool smart contract and its liquidity pool curve pursues the goal of supporting a stable price development. As already shown, stable price development - meaning a linear growth rate - is a decisive factor for the success of the project. This makes it particularly clear how relevant the synergy of the user groups is.

Accordingly, different decisive factors are a linear price growth, a high tolerance for failures among individual user groups - for example in a negative market environment - and also the quantitative relationship between these user groups. It is also relevant to evaluate how exactly a plateau in liquidity-providing yields forms, how high it is, and how this affects price stability and potential growth.

Also to be considered is how the supply should be split qualitatively over time to ensure growth is as sustainable as possible. The impact on market capitalization is also important.

The liquidity pool is used to swap tokens A and tokens B or D into each other. A part of the program, the so-called curve, determines the price at which an exchange takes place. The curve is recalculated for each transaction.

$$P_{Intuitiv} = \frac{token\,B_{all}}{Utoken\,A_{all}}$$

The intuitive value $P_{Intuitiv}$ is , which means the total amount of all tokens B (or D) divided by all tokens A.

In a given example, the liquidity pool comrpieses $Stoken\,B_{all}$ = 1300 and $token\,A_{all}$ = 1000. If a user buys 50 token A, said would change the price as follows:

$$P_{Intuitiv,alt} = \frac{1300}{1000} = 1{,}3$$

and

$$tokenB_{all} = 1300 + 50 * 1{,}3 = 1365$$

and

$$token\,A_{all} = 1000 - 50 = 950$$

results in

$$P_{Intuitiv,new} = \frac{1365}{950} \approx 1{,}437$$

and a change oft he price of

$$\Delta P = \frac{P_{Intuitiv,new}}{P_{Intuitiv,alt}} - 1 \approx \frac{1{,}437}{1{,}3} - 1 \approx 0{,}11$$

and therefore about 11%.

Most liquidity pools known in the state of the art comprise a slipparage. The idea is, that the value of the liquidity pool remains constant per swap. The equation with U as number of tokens A, $U_{Out}$ as the respective change and C for token B and d as the constant product of the same:

$$(U + U_{Out}) * (C + C_{Out}) = d; constant$$

works with (1000 + (-1)) * (1300 + $C_{Out}$) = 1300000, resulting in P(1) = $\frac{\frac{U*C}{U-1} - C}$ and therefore P(1) ≈ 1,301.

Another example known in the state oft he art for liquidity pools comprises an $k$, which is calculated

$$(U + U_{Out}) * (C + C_{Out} + k) = d; constant \Leftrightarrow P(1) = \frac{U * (C + k)}{U - 1} - (C + k)$$

$$P(1) = \frac{1000*(1300+1000)}{1000-1} - (1300 + 1000) \approx 2{,}3$$

This results in a higher value and distorts the price so that k is set to 0 according to a preferred embodiment of the present disclosure.

To analyse the stability of token A, the following formular is used with x being the period counter.

$$P(x) = \frac{U*(C+k)}{U-1} - (C + k).$$

Due to the structure of the liquidity pool, C as well as U of the previous period can be determined directly from the liquidity pool, since the value corresponds to the respective account balances; the current price P is finally defined on the basis of these two previous values. Now, it is further assumed that the interval [0;1] describes a period whose sum of swaps is expressed by n(0). In general, then, for each interval [x; x+1], there is a function n(x) which represents the sum of all swaps in that period.

Furthermore, the function n(x) does not need to be further specified, since P(x) must satisfy a price trend with as linear growth as possible for every possible value of n(x).

With these assumptions, the functions U(x) can then be determined for the total quantity of tokens A in the liquidity pool at the period, C(x) can be used to determine the total quantity of tokens B in the liquidity pool at the period, and lastly P(x) can be determined more precisely.

For U(x) = $U(x - 1) - n(x)$ with 1300 tokens B

$$U(x) = 1300 - \sum_{a=0}^{x-1} n(a).$$

For *C(x) this results in*

$$C_1 = C_0 + P\big(n(1)\big) = C_0 + \frac{U_0 * (C_0 + k)}{U_0 - n(1)} - (C_0 + k);$$

$$C(x) = C(x-1) + P\big(n(x)\big) = C(x-1) + \frac{U(x-1) * (C(x-1)+k)}{U(x-1) - n(x)} - (C(x-1) +$$

$$k) \Leftrightarrow C(x) = \frac{C(x-1) * U(x-1) - k * n(x)}{U(x-1) - n(x)}$$

With $P(x) = \frac{C(x)+k}{U(x)-1}$ in combination with $U(x)$ resulting in

$$P(x) = \frac{C(x)+k}{(1300 - \sum_{a=0}^{x-1} n(a)) - 1}.$$

With the formulas of the invention outline above, a suitable curve is created, which already automatically values larger transactions lower due to a higher slippage.

At the same time, different extensions could be implemented in the future:

- An adjustment of buy-backs using decentralized and centralized APIs, respectively, and ABIs (Application Blockchain Interfaces) that look at the current market situation.

- An "Oracle" that incorporates future price forecasts for the price of tokens A

- A weighted compensation, for example of buy-backs, according to the j-curve, through which a sustainable growth can be further ensured.

- Likewise, an upper limit is set for the payout of tokens B or C from the liquidity pool in order to prevent very large transactions and thus unsustainable price influences.

According to another embodiment of the present disclosure, the buy-backs are of high relevance to stabilize the price. A detailed description is subsequent provided of the inventive method according to the present disclosure on to technically automate a buy-back bot.

The price of the tokens A can be shown as a function of the respective period - i.e. also with a time dimension. Furthermore, the target definition should now be defined, which is aimed at by the buy-back pool. Nevertheless, this target function should be adapted to the current situation and should not grow unchecked in a linear way, as this may lead to a low sustainability in case of strong negative market trends. Before this, a definition of the buy-back volume $V(x)$ as a function of the period is necessary:

$$V(x) = V_{Initial} \, z * x - BB(x-1),$$

wherein z is growth per period which is than multiplied with x.

The function BB(x) is the volume of buy-backs per period. This is defined below. Based on the function V(x) it is possible to determine *KFAKTOR(x),* which is representative for the growth of the target function:

$$KFAKTOR(x) = \begin{cases} 1, \frac{V(x-1)}{C(x-1)} > 1 \\ \frac{V(x-1)}{C(x-1)} + \left(\frac{C(x-1)/U(x-1)/C(0)}{U(0)} - 1\right) * 0{,}01, \frac{V(x-1)}{C(x-1)} \le 1 \end{cases}.$$

In this way it is possible to adapt the growth factor as long as a high buy-back pool volume V(x) is given and an adaption happens whenever said buy-back pool volume changes.

The target function *ZFUNK(x)* results from the sum of all previous *KFAKTOR(x):*

$$ZFUNK(x) = \frac{C(0)}{U(0)} * \left(1 + \sum_{a=0}^{x} KFAKTOR(a)\right).$$

In the next method step, the difference in price is befined. Said difference in price is needed to balance the diference between *ZFUNK(x)* and *P(x)* - under consideration of *U(x)*:

$$PDIFF(x) = \left(ZFUNK(x) - P(x)\right) * U(x).$$

By the help of PDIFF (x) the number and the amount of buy-backs from buy-back pool can be defined:

$$BB(x) = \begin{cases} \left(ZFUNK(x) - P(x)\right) * V(x) * RAND(0,1), PDIFF(x) > 0 \\ \begin{cases} \frac{1}{-(PDIFF(x))}, \frac{1}{-(PDIFF(x))} < 0,1 \\ 0,1, \frac{1}{-(PDIFF(x))} \geq 0,1 \end{cases} * V(x) * RAND(0,1), PDIFF(x) \leq 0 \end{cases}.$$

This prescribes that a buy-back with low volume is also carried out if the real price development exceeds the target function for this period. If this is not the case, a buy-back with higher volume is performed, with a bound added to it. Additionally, in all cases the intermediate result is multiplied by a randomly generated number between 0 and 1 to prevent predictability of the buy-back volume.

Finally, the remaining difference between the objective function and the true price function can also be approximated as the sum of the differences of the period:

$$DIFFFUNK(x) = \left(\sum_{a=0}^{x} ZFUNK(a)\right) - \left(\sum_{a=0}^{x} P(a)\right);$$

wherein this result should be as low as possible.

Different user groups may be addressed with different tolerances. The first conclusion to be noted in this context is that an overall higher value for ZFUNK(x) is achieved provided that the sum of buy-backs from BB(x) is increased.

The prerequisite for this is that a constant result of U(x) * P(x), i.e. the value of the liquidity pool, and an increase in the value of BB(x) are assumed. Then V(x) and thus BB(x) is larger, which is why almost every negative trend can be compensated with BB(x) = PDIFF(x). Thus, the objective function then also grows constantly or more than constantly at n(x) > 0. In general, a high volume in the buy-out pool can therefore be advantageous and, above all, lead to faster responsiveness, which is compared by the different intensity of the buy-backs.

Furthermore, according to the present disclosure it may be shown that a higher liquidity in the liquidity pool - a maximum value of U(x) * P(x) and in addition a constant result for n(x) - and a maximal ratio of $\frac{U(x)*P(x)}{n(x)}$ results in a higher price stability and therefore to a lower value for *DIFFFUNK(x).*

This is given by the fact that with n(x) « *U(x)* ∗ *P(x)* the price impact per transaction and the change of P(x) is lower. Single swaps have therefore a lower price impact the higher the total value of the liquidity pool. This results in the fact that the highest value possible for U(x) * *P(x)* is of particular advantage.

If this is considered and the correlation of the quantities from DIFFUNK(x) and the following subfunctions, no optimal ratio can be derived. Instead, it can be seen that the largest possible value for U(x) * P(x), i.e. the highest possible liquidity pool value, is desirable, and under this condition even a very low buy-out pool volume V(x) has the greatest possible effect.

Therefore, the highest possible value in the liquidity pool is the top priority, while an increase in V(x) has only the second highest relevance. This also results in the basic structuring of V(x) with the help of the Flamingo Tokens: A high liquidity pool value promotes stability within itself, while a high V(x) serves as an outside measure to support U(x) * P(x).

This raises the question of how high the buy-out volume should now be in relation to U(x) * P(x) under the condition n(x) << U(x) * P(x) defined in the second conclusion.

Thus, one of the surprising findings of the present invention is that the goal is to achieve the maximum efficiency for the available buy-out pool volume V(x).

Therefore, it should be ensured that the factor V(x) in BB(x) does not have such a large effect that much of the volume is not used. In itself, this would not be harmful, however, based on the second conclusion, efforts could instead be focused on increasing the liquidity pool value. Basically, due to the structure of the algorithm of BB(x) and the applied reciprocal as a factor, the full volume of the buy-back pool can never be exhausted, so it would technically no longer be functional.

Finally, this results based on the formula $\dfrac{BB(x)}{U(x)*P(x)}$ ; $n(x) \ll U(x) * P(x)$ in an optimal value 0,5% per period, while the highest efficiency of buy-backs can be achieved with values between 0.1 and 0.2

Regardless of the value most recently achieved in the range 0.1-0.5%, however, it should be noted that there is a linear relationship between the liquidity pool value and the buy-back per period: U(x) * P(x) approximately BB (x).

The impact of staking programs can also be summarized well. Under staking programs, n(x) temporarily decreases while the staking programs are active. Accordingly, the result of P(x) * U(x) needed for the same value of DIFFUNK(x) is also lower, as well as the volume V(x) needed and the buy-backs BB(x) used.

The coefficient g by which the required stability is temporarily reduced by the reduction of n(x) can also be defined. Thus, for the principle of stacking to work effectively, the ratio of new sales per volume must be maintained so that the same coefficient remains effective. Provided the price increases - which is the case based on the error function - the volume of tokens A used can be reduced. In summary, if the price increases, the volume of tokens A can be reduced while the same coefficient g is maintained.

If, nevertheless, the volume of tokens A used in staking programs per period should be reduced, this should be done by continuously adjusting the coefficient g in the sense of g*BB(x) = 1 while increasing n(x). In this way, a temporary plateau, which can only be avoided by increasing the buy-back volume after BB(x) > BB(x-1)>BB(x-2 ... can be avoided.

Likewise, the positive effect of an economically lucrative liquidity-providing program can be established: This is preceded by the assumption that due to an unchanged net sum n(x) but an overall increase in volume, the sum of fees also increases, and thus liquidity-providing becomes more profitable, and an increase in U(x) * P(x) follows. Thus, as the value in the liquidity pool increases, also relative to V(x), the effectiveness of the buy-back pool may be dampened. However, this dampening is offset by the higher demand that results from this process, and thus a renewed increase in the value in the liquidity pool.

This automatically regulates a more secured price stability, from which follows a positive development for P(x) with a potentially more than constant growth for P'(x).

The various illustrative logical blocks, modules, circuits, and method steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

## Claims

1. A method for processing a digital token comprising:

> an issuer system comprising a systems electronic wallet being in communication with at least one smart contract, wherein the smart contract is configured and adapted to create tokens A, wherein
> said tokens A are created when a user's electronic wallet is signing said smart contract of the issuer systems, and wherein
> after signing of said smart minting contract the user's smart wallet is sending a number of tokens B to the system's smart wallet; and
> in exchange for receiving a said number of tokens B, the system's electronic wallet is sending a number of tokens A to the user's wallet in a ration to the tokens B received, wherein said ratio is provided by the smart minting contract, and wherein

EP 4 357 999 A1

the minting smart contract is sending in addition to the number of tokens A a number of tokens C in a given ration to the tokens A to the user's electronic wallet, wherein tokes C are not identical with tokens A.

2.  Method according to claim 1, wherein
    the issuer system comprises a buyback pool smart contract for stabilizing the price of tokes A, wherein a buyback pool smart contract is comprising a buyback pool wallet, wherein for providing liquidity for the buyback pool in form of tokens B and/or D, a user's wallet is sending a number of tokens C and tokens B and/or D in a given ration to the tokens C to the buyback pool wallet.

3.  Method according to claim 1 or claim 2, wherein
    the number of tokens C send to the buyback pool wallet is automatically burned buy the buyback pool smart contract by sending the same to a dead wallet.

4.  Method according to one of the claims 2 or 3, wherein
    the ration of tokens B and/or D to tokens C is fixed.

5.  Method according to one of the claims 2 or 3, wherein
    the ration of tokens B and/or D to tokens C is dynamic, in particular depending on the number and ration of tokens A and B or D in the buyback pool.

6.  Method according to any of the claims 2 to 5, wherein
    tokens B and/or D are stable coins.

7.  Method according to any of the claims 2 to 6, wherein
    whenever the price of one token A in relation to one token B and/or D is lower than a given threshold F, the buyback pool wallet is buying tokens A in exchange for tokens B or D.

8.  Method according to any of the preceding claims, wherein
    the issuer systems comprises a liquidity pool smart contract having three electronic wallets, one wallet for tokens A, one wallet for tokens B and one wallet as pool-state account.

9.  Method according to claim 7, wherein
    the liquidity pool smart contracts is offering the exchange from tokens A to tokens B, the exchange from tokens B to tokens A, to add liquidity, to remove liquidity, to let user claim liquidity-pool rewards.

10. Method according to any of the preceding claims, wherein
    the buyback pool smart contract comprises an internal buyback pool token E for allocating a percentage of the buyback pool to each user separately.

11. Method according to any of the preceding claims, wherein
    the buyback pool smart contract buys tokens A from the liquidity pool in exchange of tokens B and/or D.

12. Method according to claim 10, wherein
    the bought tokens A by the buyback pool smart contract are distributed to the user's electronic wallets in relationship to their respective share of the buyback pool.

13. Method according to claim 11, wherein
    in addition to the distribution of tokens A to the user's, a bonus in form of additional tokens A in a given ratio to the paid number of tokens A is send to the respective user's wallet.

14. Method according to any of the preceding claims, wherein
    the issuer system comprises a second buyback pool smart contract for stabilizing the price of tokes A, wherein the second buyback pool smart contract is comprising a second buyback pool wallet with an initial supply of tokens A, and wherein whenever the price of one token A in relation to one token B and/or D is higher than a given threshold G, the second buyback pool wallet is selling tokens A in exchange for tokens B or D.

15. A computer-based system for processing transactions, in particular a method according to one of the preceding claims, comprising:

a processor; and a tangible, non-transitory memory configured to communicate with the processor, the tangible, non-transitory memory having instructions stored thereon that, in response to execution by the processor, cause an issuer system to perform operations according to one of the preceding claims.

Europäisches
Patentamt
European
Patent Office
Office européen
des brevets

# EUROPEAN SEARCH REPORT

**Application Number**

EP 22 20 2554

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/258061 A1 (BEADLES ROBERT DALE [US] ET AL) 13 August 2020 (2020-08-13) * paragraph [0061] – paragraph [0286] * * figures * | 1-15 | INV. G06Q20/06 G06Q20/38 G06Q20/36 G06Q40/04 |
| A | US 2022/327529 A1 (WILLIAMS RICHARD K [US] ET AL) 13 October 2022 (2022-10-13) * paragraph [0087] – paragraph [0273] * * paragraph [0320] – paragraph [0399] * * figures * | 1-15 | G06Q40/06 H04L9/00 |
| A | US 2022/215469 A1 (JETTE DAVID [US] ET AL) 7 July 2022 (2022-07-07) * paragraph [0006] – paragraph [0037] * * paragraph [0050] – paragraph [0152] * * figures * | 1-15 | |
| A | US 2021/398106 A1 (HERTZOG EYAL [IL] ET AL) 23 December 2021 (2021-12-23) * paragraph [0034] – paragraph [0178] * * figures * | 1-15 | |
| A | KYLE MICHELSON ET AL: "Accumulate: An identity-based blockchain protocol with cross-chain support, human-readable addresses, and key management capabilities", ARXIV.ORG, CORNELL UNIVERSITY LIBRARY, 201 OLIN LIBRARY CORNELL UNIVERSITY ITHACA, NY 14853, 14 April 2022 (2022-04-14), XP091204475, * Sections 2.4, 3-8 * | 1-15 | **TECHNICAL FIELDS SEARCHED (IPC)** H04L G06Q |

The present search report has been drawn up for all claims

| Place of search | Date of completion of the search | Examiner |
|---|---|---|
| The Hague | 31 March 2023 | Rachkov, Vassil |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 22 20 2554**

This annex lists the patent family members relating to the patent documents cited in the above-mentioned European search report.
The members are as contained in the European Patent Office EDP file on
The European Patent Office is in no way liable for these particulars which are merely given for the purpose of information.

**31-03-2023**

| Patent document cited in search report | | Publication date | Patent family member(s) | | Publication date |
|---|---|---|---|---|---|
| US 2020258061 | A1 | 13-08-2020 | US | 2020258061 A1 | 13-08-2020 |
| | | | US | 2023018800 A1 | 19-01-2023 |
| US 2022327529 | A1 | 13-10-2022 | US | 2022327529 A1 | 13-10-2022 |
| | | | WO | 2022212801 A2 | 06-10-2022 |
| US 2022215469 | A1 | 07-07-2022 | US | 11288736 B1 | 29-03-2022 |
| | | | US | 2022215469 A1 | 07-07-2022 |
| US 2021398106 | A1 | 23-12-2021 | US | 11188896 B1 | 30-11-2021 |
| | | | US | 2021398105 A1 | 23-12-2021 |
| | | | US | 2022147975 A1 | 12-05-2022 |

EPO FORM P0459

For more details about this annex : see Official Journal of the European Patent Office, No. 12/82